# EUROPÄISCHE PATENTSCHRIFT

(11) **EP 1 176 547 B1**
(45) Veröffentlichungstag und Bekanntmachung des Hinweises auf die Patenterteilung: **01.09.2010**
(21) Anmeldenummer: 00115075.4
(22) Anmeldetag: 25.07.2000
(51) Int. Cl.: G06K 19/077

(54) **Etikettierte Chipkarte**
Labeled chipcard
Carte à puce avec étiquette

(43) Veröffentlichungstag der Anmeldung: 30.01.2002
(73) Patentinhaber: Infineon Technologies AG, 85579 Neubiberg (DE)
(72) Erfinder: Püschner, Frank, 93309 Kelheim (DE); Fischer, Jürgen, 93180 Deuerling (DE)

(56) Entgegenhaltungen:
- EP-A- 0 503 730
- DE-A- 19 615 980
- US-A- 4 999 742
- US-A- 5 673 179

## Beschreibung

Die vorliegende Erfindung betrifft eine Chipkarte mit einem aufgebrachten Etikett (label).

Bei der Herstellung einer Chipkarte wird üblicherweise ein Chip mit einer integrierten Schaltung in eine Aussparung eines Kartenkörpers aus Kunststoff eingesetzt, von wo aus elektrische Anschlussverbindungen zu Kontakten oder zu einer für drahtlose Übertragung vorgesehenen Antennenspule geführt sind. Die Oberseite des Kunststoffkörpers kann bedruckt oder beklebt werden. Für Massenprodukte, wie z. B. eine Multimediakarte, sollen der Aufbau und die Herstellung einer derartigen Karte möglichst einfach und billig sein. Das gilt insbesondere dann, wenn die Anforderungen an die Dauerhaftigkeit und Robustheit der Karte gering sind. Das Aufbringen eines Etiketts (label) mit einer Beschriftung auf oder in eine als Gehäuse des Chips vorgesehene Vergussmasse ist in der Regel erwünscht, aber mit hohem Fertigungsaufwand verbunden

Im nächsten Stand der Technik, der DE 19615980 A1 ist ein Verfahren zur Herstellung einer Datenträgerkarte mit Etikett beschrieben. Eine Aussparung für einen IC-Chip ist mit einem Deckel versehen, der mit dem Etikett überklebt ist. An dem mit Anschlusskontakten versehenen Rand der Oberseite der Datenträgerkarte befindet sich eine Kante, die mit dem Etikett nicht überklebt wird. Der Deckel ist einstückig mit dem Kartenkörper ausgebildet und an einer äußeren Kante des Kartenkörpers mit einem dünnen, flexiblen Bereich versehen, der um die Kante gebogen wird, so dass keine weitere Stufe oder Kante auf der Oberseite entsteht. Eine alternative Ausgestaltung sieht vor, das Etikett selbst als Deckel aufzubringen und um die seitliche Kante des Kartenkörpers herum aufzukleben.

In der EP 0503730 A1 ist eine Chipkarte beschrieben, bei der der Chip in einer Aussparung des Kartenkörpers angeordnet ist. Der Chip ist auf einem Träger angebracht, der einen Deckel für die Aussparung bildet, so dass der Kartenkörper nach außen hin planar abgedeckt ist.

In der US 4,999,742 ist ein elektronisches Modul für einen Kartenkörper oder dergleichen beschrieben. Ein IC-Chip ist innerhalb einer Spule angeordnet und in einer Vergussmasse eingebettet.

In der US 5,673,179 ist eine Chipkarte mit einer Verstärkungsstruktur, die flächig auf dem Kartenkörper aufgebracht ist und seitliche Kanten umfasst, beschrieben.

Aufgabe der vorliegenden Erfindung ist es, eine kostengünstig herstellbare Chipkarte, insbesondere als Multimediakarte, anzugeben, die auf einfache Weise auch beidseitig mit einem Etikett versehen werden kann.

Diese Aufgabe wird mit der Chipkarte mit den Merkmalen des Anspruches 1 gelöst. Ausgestaltungen ergeben sich aus den abhängigen Ansprüchen.

Die erfindungsgemäße Chipkarte besitzt einen Kartenkörper aus Kunststoff, der an einer oder beiden Hauptseiten mit großflächigen ebenen Vertiefungen oder Aussparungen für ein jeweiliges Etikett versehen ist. Die Kanten des Kartenkörpers an den Rändern der Vertiefungen oder Aussparungen bilden eine rahmenartige Einfassung des Etiketts. Der Chip befindet sich in einer Aussparung des Kartenkörpers vorzugsweise auf einer Folie, deren nicht mit dem Chip versehene Rückseite eine äußere Oberfläche der Chipkarte bildet, auf der das Etikett aufgebracht ist. Der Chip kann in eine an sich bekannte Vergussmasse eingebettet sein. Elektrisch leitende Verbindungen, die für einen externen Anschluss des Chips benötigt werden, sind z. B. als Drahtverbindungen (bond wires) vorhanden, die von Kontakten an dem Chip durch die Folie hindurch zu Kontakten auf der Rückseite der Folie, d. h. somit auf der Oberfläche der Chipkarte, geführt sind. Die auf der Oberfläche der Chipkarte vorhandenen elektrischen Kontakte sind als Anschlussflächen gestaltet und bei einer bevorzugten Ausführungsform der Erfindung so in der für das Etikett vorgesehenen Vertiefung oder Aussparung angeordnet, dass Ränder der Kontakte gleichzeitig Anteile der Einfassung des Etiketts bilden.

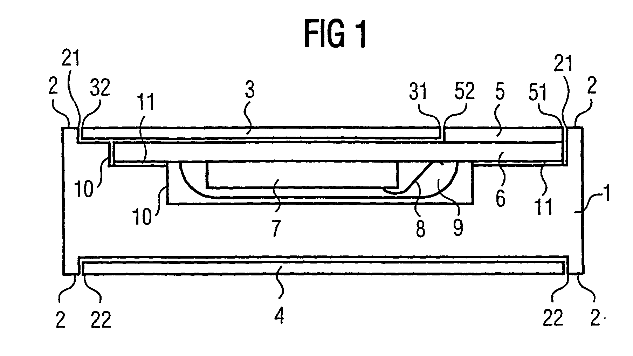

Es folgt eine genauere Beschreibung eines Ausführungsbeispiels der Erfindung anhand der beigefügten Figuren 1 und 2. Die Figur 1 zeigt eine erfindungsgemäße Chipkarte im Querschnitt.

Die Figur 2 zeigt die Chipkarte der Figur 1 in Aufsicht.

In Figur 1 ist im Querschnitt der Kartenkörper 1 aus Kunststoff, vorzugsweise aus Spritzguss, dargestellt, deren zwei Hauptseiten 2 auf jeweils einen schmalen Rahmen reduziert sind. Dazwischen befinden sich Aussparungen, die durch die Kanten 21 bzw. 22 der Rahmen begrenzt sind. In der in der Figur oberen Aussparung innerhalb der oberen Kanten 21 ist ein oberes Etikett 3 aufgebracht, in der unteren Aussparung innerhalb der unteren Kanten 22 entsprechend ein unteres Etikett 4. Eines dieser Etikette kann auch weggelassen sein; zur Vereinfachung der Herstellung werden in diesem Fall das untere Etikett 4 und die dort vorhandene Aussparung in der unteren Hauptseite des Kartenkörpers weggelassen. Die Etikette sind durch die Kanten 21 bzw. 22 an den Rändern der Aussparungen im Kartenkörper eingefasst.

Bei dem dargestellten Ausführungsbeispiel sind auf der Oberseite der Chipkarte Kontakte 5 vorhanden, die in einem Teil der für das Etikett vorgesehenen Aussparung angeordnet sind und deren Ränder einen Anteil der Einfassung des Etiketts bilden. Diese Kontakte sind auf der Rückseite einer Folie 6 angebracht, die die mit dem Etikett versehene Fläche an der Oberseite der Chipkarte bildet. Diese Folie ist vorzugsweise eine Glasepoxyfolie. Die darauf aufgebrachten Kontakte 5 sind vorzugsweise so dick wie das obere Etikett 3 oder etwas dikker als das Etikett, um zu verhindern, dass sich das Etikett bei mechanischer oder thermischer Beanspruchung an den Rändern von der Folie ablöst. Die Folie und das Etikett sind vorzugsweise mittels eines Temperaturschmelzverfahrens (hot melt), ggf. unter Verwendung einer geeigneten, zusätzlich aufgebrachten Schweißmasse 11, in einem an sich bekannten Laminierverfahren auf der jeweilige Basisfläche der betreffenden Aussparung in dem Kartenkörper befestigt.

Der Chip 7 befindet sich auf der Vorderseite der Folie 6 in einer größeren Aussparung des Kartenkörpers. Drahtverbindungen 8, die zusammen mit dem Chip in eine Vergussmasse 9, vorzugsweise entsprechend einer Globe-top-Abdeckung, eingehüllt sind, verbinden Kontakte des Chips mit Kontakten an der Folie 6, die mittels Durchkontaktierungen (vias) durch die Folie hindurch mit den Kontakten 5 auf der Oberseite der Chipkarte elektrisch leitend verbunden sind. Die gesamte obere Aussparung des Kartenkörpers 1 besitzt mehrere Stufen 10, so dass eine tiefste Aussparung zur Aufnahme des Chips 7, eine mittlere Aussparung zur Aufnahme der lateral größer als der Chip bemessenen Folie 6 und eine flachste Aussparung zur Aufnahme und Begrenzung des Etiketts 3 einschließlich der oberseitigen Kontakte 5 ausgebildet sind. Die rechten und linken Ränder 31 bzw. 32 des oberen Etiketts 3 und die rechten und linken Ränder 51 bzw. 52 der oberseitigen Kontakte 5 sind in der in Figur 2 dargestellten Aufsicht eingezeichnet.

In Figur 2 sind die Anordnung des oberen Etiketts 3 und der oberen Kontakte 5 und deren in Figur 1 erkennbaren Ränder 31, 32, 51, 52 wiedergegeben. Zwischen den Kontakten 5 ist die nach oben weisende Rückseite der Folie 6 frei. An diesen Stellen kann zur Einebnung der Oberfläche eine elektrisch isolierende Füllmasse eingebracht sein. Der rechteckige Ausschnitt in dem von der oberen Hauptseite 2 des Kartenkörpers verbliebenen Rahmen, in den die Folie 6 mit dem darauf befestigen Chip und den darauf aufgebrachten Kontakten 5 eingesetzt ist, ist in Figur 2 deutlich erkennbar.

## Patentansprüche

1. Chipkarte mit einem Kartenkörper (1) aus Kunststoff, der eine obere und eine untere Hauptseite aufweist, wobei die obere Hauptseite eine Aussparung aufweist, in die ein Chip (7) eingesetzt ist, und mit einem Etikett (3), **dadurch gekennzeichnet, dass** das Etikett (3) durch Kanten (12) einer für das Etikett (3) vorgesehenen Ausparung in der unteren Hauptseite des Kartenkörpers eingefasst ist.

2. Chipkarte nach Anspruch 1, bei der
der Chip (7) auf einer Folie (6) angebracht ist und
die von dem Chip abgewandte Seite der Folie mit dem Etikett (3) versehen ist.

3. Chipkarte nach Anspruch 2, bei der
die mit dem Etikett (3) versehene Seite der Folie (6) Kontakte (5) aufweist, die mit einem jeweiligen Kontakt des Chips (7) elektrisch leitend verbunden sind, und
diese Kontakte (5) Ränder (52) aufweisen, die zu der Einfassung des Etiketts (3) gehören.

4. Chipkarte nach Anspruch 2 oder 3, bei der
die Folie (6) eine Glasepoxyfolie ist.

5. Chipkarte nach einem der Ansprüche 1 bis 4, bei der zwei einander gegenüberliegende Seiten mit je mindestens einem Etikett (3, 4) versehen sind.

6. Chipkarte nach einem der Ansprüche 1 bis 5, die als Multimediakarte vorgesehen ist.

## Claims

1. Chip card comprising a plastic card body (1), which has an upper main side and a lower main side, the upper main side having a recess in which a chip (7) is fitted, and comprising a label (3), **characterized in that** the label (3) is mounted by edges (12) of a recess provided for the label (3) in the lower main side of the card body.

2. Chip card according to Claim 1, in which the chip (7) is provided on a sheet (6) and the side of the sheet that is facing away from the chip is provided with the label (3).

3. Chip card according to Claim 2, in which the side of the sheet (6) that is provided with the label (3) has contacts (5), which are connected in an electrically conducting manner to a respective contact of the chip (7), and these contacts (5) have borders (52), which belong to the mounting for the label (3).

4. Chip card according to Claim 2 or 3, in which the sheet (6) is a glass epoxy sheet.

5. Chip card according to one of Claims 1 to 4, in which two sides lying opposite each other are each provided with at least one label (3, 4).

6. Chip card according to one of Claims 1 to 5, which is intended as a multimedia card.

## Revendications

1. Carte à puce comprenant un corps (1) de carte en matière plastique qui a une face principale supérieure et une face principale inférieure, la face principale supérieure ayant un évidement dans lequel est inséré une puce (7), et comprenant une étiquette (3), **caractérisée en ce que** l'étiquette (3) est enchâssée dans la face principale inférieure du corps de la carte par des arêtes (12) d'un évidement prévu pour l'étiquette (3).

2. Carte à puce suivant la revendication 1, dans laquelle la puce (7) est mise sur une feuille (6) et la face de la feuille éloignée de la puce est munie de l'étiquette (3).

3. Carte à puce suivant la revendication 2, dans laquelle la face de la feuille (6) munie de l'étiquette (3) a des contacts (5) qui sont reliés à respectivement un contact de la puce (7) d'une manière conductrice de l'électricité et
ces contacts (5) ont des bords (52) qui tiennent à l'encadrement de l'étiquette (3).

4. Carte à puce suivant la revendication 2 ou 3, dans laquelle la feuille (6) est une feuille en verre-époxy.

5. Carte à puce suivant l'une des revendications 1 à 4, dans laquelle deux faces opposées l'une à l'autre sont munies respectivement d'au moins une étiquette (3, 4).

6. Carte à puce suivant l'une des revendications 1 à 5, qui est prévue comme carte multimédia.
